# EUROPEAN PATENT APPLICATION

(11) **EP 2 412 787 A1**
(43) Date of publication of application: **01.02.2012**
(21) Application number: 10755620.1
(22) Date of filing: 17.03.2010
(51) Int. Cl.: C10G 65/04, B01J 23/42, B01J 23/46, C10G 2/00, C10G 45/10, C10G 47/18, C10G 65/02

(54) **METHOD FOR PRODUCING LIQUID FUEL AND SYSTEM FOR PRODUCING LIQUID FUEL**

(30) Priority: 27.03.2009 JP 2009080489
(71) Applicant: Japan Oil, Gas and Metals National Corporation, Minato-ku, Tokyo 105-0001 (JP); INPEX Corporation, Tokyo 107-6332 (JP); JX Nippon Oil & Energy Corporation, Chiyoda-ku Tokyo 100-8162 (JP); Japan Petroleum Exploration Co., Ltd., Tokyo 100-0005 (JP); Cosmo Oil Co., Ltd., Tokyo 105-8528 (JP); Nippon Steel Engineering Co., Ltd, Tokyo 141-8604 (JP)
(72) Inventor: IWAMA, Marie, Tokyo 100-8162 (JP)
(74) Representative: Vossius & Partner
(86) International application number: PCT/JP2010/001919
(87) International publication number: WO 2010/109817

(57) **Abstract**

A liquid fuel producing method which synthesizes hydrocarbons from a synthesis gas by a Fisher-Tropsch synthesis reaction and produces liquid fuels by using the hydrocarbons, the method includes: subjecting the hydrocarbons to a pretreatment in the presence of a hydrogen by using a catalyst for the pretreatment in which at least one kind of metal selected from metals of Groups 6, 7, 8, 9, 10, 11, and 14 of the Periodic Table is supported on a carrier; and hydroprocessing the hydrocarbons by using a hydroprocessing catalyst after the pretreatment.

## Description

### Technical Field

The present invention relates to a liquid fuel producing method and a liquid fuel producing system.
Priority is claimed on Japanese Patent Application No. 2009-080489, filed March 27, 2009, the content of which is incorporated herein by reference.

### Background Art

As one of the methods of synthesizing liquid fuels from a natural gas, the GTL (Gas To Liquids: liquid fuel synthesis) technique is known. The GTL technique is a technique of producing liquid fuels and other products, such as naphtha (raw gasoline), kerosene, gas oil, and wax, through the processes of reforming the natural gas to produce a synthesis gas containing a carbon monoxide gas (CO) and a hydrogen gas (H₂) as main components, synthesizing hydrocarbon compounds (FT synthesis hydrocarbons) using this synthesis gas as a source gas by the Fischer-Tropsch synthesis reaction (hereinafter referred to as "FT synthesis reaction"), and hydroprocessing and fractionating the FT synthesis hydrocarbons. Since the liquid fuel products using the FT synthesis hydrocarbons as a feedstock have high paraffin content, and do not contain sulfur components, for example, as shown in Patent Document 1, these liquid fuel products attract attention as environment-friendly fuels.

The above hydroprocessing is a step where the FT synthesis hydrocarbons is subjected to at least one of hydrocracking, hydroisomerization, and hydrotreating by using a hydrogen gas. In the hydrocracking , hydrocarbons with a small carbon number are produced by cleaving C-C bonds of hydrocarbons with a large carbon number. In the hydroisomerization , straight chain saturated hydrocarbons (normal paraffins) are converted into branched saturated hydrocarbons (isoparaffins). In the hydrotreating, olefins and oxygen-containing compounds, such as alcohols, which are by-products in the FT synthesis reaction, are converted into paraffinic hydrocarbons, by hydrogen addition to the unsaturated bonds of the olefins and a hydrodeoxygenation reaction of the oxygen-containing compounds respectively. As a catalyst (hydroprocessing catalyst) used for the above hydroprocessing, for example, a catalyst containing platinum as an active metal is known.
In addition, as a method of removing a carbon monoxide from a fluid containing a comparatively low-concentration of carbon monoxide, a methanation reaction where a carbon monoxide is reduced to methane by bringing the fluid containing a carbon monoxide into contact with a catalyst under existence of hydrogen is known. As a catalyst effective for the methanation reaction, for example, a catalyst in which ruthenium and at least one kind of metal selected from metals other than ruthenium, especially metals of Group 4B (Group 14), Group 6A ( Group 6), Group 7A ( Group 7), and Group 8 ( Groups 8 to 10) of the Periodic Table are supported on a metal oxide carrier is known as disclosed in the following Patent Document 2.

### Citation List

### Patent Document

[Patent Document 1] Japanese Patent Unexamined Publication No. 2004-323626
[Patent Document 2] Japanese Patent Unexamined Publication No. 2007-252988

### Summary of Invention

### Technical Problem

However, a carbon monoxide gas included in a feed gas for the FT synthesis reaction may be dissolved in the FT synthesis hydrocarbons. If the carbon monoxide is adsorbed on a hydroprocessing catalyst, the catalyst is poisoned and the lifetime thereof becomes short. For this reason, it is necessary to replace catalysts frequently and a maintenance cost increases.

In view of the above situations, the object of the present invention is to provide a liquid fuel producing method and liquid fuel producing system capable of realizing cost reduction.

### Solution to Problem

The liquid fuel producing method of the present invention is a liquid fuel producing method which synthesizes hydrocarbons from a synthesis gas by a Fisher-Tropsch synthesis reaction and produces liquid fuels by using the hydrocarbons. The method includes: subjecting the hydrocarbons to a pretreatment in the presence of a hydrogen by using a catalyst for the pretreatment in which at least one kind of metal selected from metals of Groups 6, 7, 8, 9, 10, 11, and 14 of the Periodic Table is supported on a carrier; and hydroprocessing the hydrocarbons by using a hydroprocessing catalyst after the pretreatment.

According to the present invention, in the pretreatment which is provided in the stage before the hydroprocessing, a methanation reaction which converts a carbon monoxide gas dissolved in the FT synthesis hydrocarbons into a methane gas proceeds with a hydrogen and a catalyst for the pretreatment which supports at least one kind of metal selected from metals of Groups 6, 7, 8, 9, 10, 11, and 14 of the Periodic Table. Therefore, the carbon monoxide gas will be removed from the FT synthesis hydrocarbons to be hydroprocessed. Accordingly, since the hydroprocessing catalyst used in the hydroprocessing can be prevented from being poisoned by the carbon monoxide gas, the lifetime of the catalyst can be kept from being shortened. This can reduce the cost of maintenance.
In addition, here, the Periodic Table means the Periodic Table of Elements of the long period type specified in 1989 by IUPAC (International Union of Pure and Applied Chemistry). Additionally, the previous Periodic Table of the specification of IUPAC before the specification in 1989 is that of the short period type using sub-groups, in which group 6 was called the Group 6(VI)A, Group 7 was called Group 7(VII)A, Groups 8 to 10 were called Group 8(VIII), Group 11 was called Group 1(I)B, and Group 14 was called Group 4(IV)B.

In the liquid fuel producing method of the present invention, a noble metal of Group 9 or 10 of the Periodic Table may be further supported on the carrier of the catalyst for the pretreatment.
In this case, a noble metal of Group 9 or 10 of the Periodic Table may be further supported on the carrier of the catalyst for the pretreatment. Therefore, in the pretreatment, it is possible to convert oxygen-containing compounds, such as alcohols contained in the FT synthesis hydrocarbons into paraffinic hydrocarbons and water by a hydrodeoxygenation reaction. When hydroprocessing is performed on each fraction containing the oxygen-containing compounds without the pretreatment, water which is generated as a by-product in the hydroprocessing, and the by-product water may cause poisoning of the hydroprocessing catalyst. Thus, it is believed that the poisoning of the hydroprocessing catalyst is suppressed by performing the hydrodeoxygenation reaction of the oxygen-containing compounds in the pretreatment step, and performing the hydroprocessing with the by-product water as a gas (steam).

In the liquid fuel producing method of the present invention, at least one kind of metal selected from metals of Groups 6, 7, 8, 9, 10, 11, and 14 of the Periodic Table may be at least one kind of metal selected from ruthenium, nickel, and copper.
In this case, at least one kind of metal selected from ruthenium, nickel, and copper is used as at least one kind of metal selected from metals of Ggroups 6, 7, 8, 9, 10, 11, and 14 of the Periodic Table which is supported on the catalyst for the pretreatment. Thus, even in a case where the amount of metal supported is reduced, the methanation reaction efficiently proceeds, and a carbon monoxide dissolved in the FT synthesis hydrocarbons can be removed. In a case where ruthenium is selected among such metals, the amount of metal supported can achieve the maximum reduction with required methanation activity maintained.

In the liquid fuel producing method of the present invention, the noble metal of Group 9 or 10 of the Periodic Table may be platinum.
In this case, since platinum is used as the noble metal of Group 9 or 10 of the Periodic Table supported on the catalyst for the pretreatment, even in a case where the amount of metal supported is reduced, the hydrodeoxygenation reaction of the oxygen-containing compounds, such as alcohols contained in the FT synthesis hydrocarbons, can be efficiently performed.

In the liquid fuel producing method of the present invention, ruthenium of 0.05 mass% or more and 10.0 mass% or less with respect to the total mass of the catalyst may be supported on the carrier of the catalyst for the pretreatment.
If the amount of ruthenium supported exceeds 10 mass%, the methanation reaction of a carbon dioxide gas which coexists occurs easily, selectivity is lowered, and the removal effect of a carbon monoxide gas becomes insufficient, which are not preferable. On the other hand, if the amount of ruthenium supported is less than 0.05 mass%, this is not preferable because there is a possibility that the methanation reaction of the carbon monoxide gas does not sufficiently proceed, and the poisoning of the hydroprocessing catalyst caused by the carbon monoxide gas cannot be suppressed. According to the present invention, ruthenium of 0.05 mass% or more and 10.0 mass% or less with respect to the total mass of the catalyst is supported on the carrier of the catalyst for the pretreatment. Thus, these problems can be avoided.

In the liquid fuel producing method of the present invention, platinum of 0.05 mass% or more and 10.0 mass% or less with respect to the total mass of the catalyst may be supported on the carrier of the catalyst for the pretreatment.
Even when the amount of platinum supported is made greater than 10 mass%, further improvements in activity against the hydrodeoxygenation reaction of the oxygen-containing compounds, such as alcohols, are difficult, and this is not preferable because of cost increase. On the other hand, when the amount of platinum supported is less than 0.05 mass%, this is not preferable because there is a possibility that the hydrodeoxygenation reaction of the oxygen-containing compounds will not sufficiently proceed. According to the present invention, platinum of 0.05 mass% or more and 10.0 mass% or less with respect to the total mass of the catalyst is supported on the carrier of the catalyst for pretreatment. Thus, the above problems can be avoided.

In the liquid fuel producing method of the present invention, the hydrocarbons may be fractionally distilled before the hydroprocessing.
In this case, since the FT synthesis hydrocarbons is fractionally distilled before the hydroprocessing, the pretreatment and the hydroprocessing can be performed for every fraction separately.

In the liquid fuel producing method of the present invention, every fraction obtained by fractionally distilling the hydrocarbons may be separately subjected to the pretreatment.
In this case, since every fraction obtained by fractionally distilling the FT synthesis hydrocarbons is separately subjected to the pretreatment after the fractional distillation, optimal pretreatment can be performed for the each fraction. This can remove a carbon monoxide gas more efficiently.

The liquid fuel producing system of the present invention is a liquid fuel producing system which synthesizes hydrocarbons from a synthesis gas by a Fisher-Tropsch synthesis reaction and produces liquid fuels by using the hydrocarbons. The system includes: a pretreatment apparatus which is packed with a catalyst for a pretreatment in which at least one kind of metal selected from metals of Groups 6, 7, 8, 9, 10, 11, and 14 of the Periodic Table is supported on a carrier, is connected with a supply line for a hydrogen gas, and in which the hydrocarbons are subjected to the pretreatment; and a hydroprocessing apparatus which is located at the downstream of the pretreatment apparatus, is packed with a hydroprocessing catalyst, and hydroprocesses the hydrocarbons flowing out of the pretreatment apparatus.

By using the liquid fuel producing system of the present invention, in the pretreatment apparatus which is provided at the downstream of the hydroprocessing apparatus, a methanation reaction which converts a carbon monoxide gas dissolved in the FT synthesis hydrocarbons into a methane gas proceeds by the packed catalyst for the pretreatment which supports at least one kind of metal selected from metals of Groups 6, 7, 8, 9, 10, 11, and 14 of the Periodic Table and the hydrogen supplied by the supply line for a hydrogen gas. Therefore, the carbon monoxide gas will be removed from the FT synthesis hydrocarbons to be hydroprocessed. Accordingly, since the hydroprocessing catalyst used in the hydroprocessing can be prevented from being poisoned by the carbon monoxide gas, the lifetime of the catalyst can be kept from being shortened. This can reduce the cost of maintenance.

In the liquid fuel producing system of the present invention, a noble metal of Group 9 or 10 of the Periodic Table may be supported on the carrier of the catalyst for the pretreatment.
Since the effects exhibited by the liquid fuel producing systems of the present invention are the same as those of the corresponding liquid fuel producing method of the present invention, the description thereof is omitted in order to avoid duplication. In addition, the following respective liquid fuel producing systems of the present invention are also the same.

In the liquid fuel producing system of the present invention, at least one kind of metal selected from metals of Groups 6, 7, 8, 9, 10, 11, and 14 of the Periodic Table may be at least one kind of metal selected from ruthenium, nickel, and copper.

In the liquid fuel producing system of the present invention, the precious metal of the group 9 or 10 of the periodic table may be platinum. the noble metal of Group 9 or 10 of the Periodic Table may be platinum.

In the liquid fuel producing system of the present invention, ruthenium of 0.05 mass% or more and 10.0 mass% or less with respect to the total mass of the catalyst may be supported on the carrier of the catalyst for the pretreatment.

In the liquid fuel producing system of the present invention, platinum of 0.05 mass% or more and 10.0 mass% or less with respect to the total mass of the catalyst may be supported on the carrier of the catalyst for the pretreatment.

In the liquid fuel producing system of the present invention, a fractional distillation apparatus which is provided at the upstream of the hydroprocessing apparatus and fractionally distills the hydrocarbons may be further included.

In the liquid fuel producing system of the present invention, the pretreatment apparatus may be provided separately for every fraction which is obtained by fractionally distilling the hydrocarbons at the downstream of the fractional distillation apparatus.

### Advantageous Effects of Invention

According to the present invention, by efficiently removing a carbon monoxide gas dissolved in the FT synthesis hydrocarbons in the pretreatment, it is possible to suppress the poisoning of the hydroprocessing catalyst caused by the adsorption of the carbon monoxide gas, to reduce the replacement frequency of the catalyst, and to realize the reduction in cost required for maintenance.

### Brief Description of the Drawings

[FIG. 1] FIG 1 is an overall schematic diagram showing the configuration of a hydrocarbon synthesizing system according to an embodiment of the present invention.
[FIG 2] FIG. 2 is a partial schematic diagram showing the configuration of a liquid fuel producing system.
[FIG 3] FIG. 3 is a partial schematic diagram showing another configuration of the liquid fuel producing system according to the present invention.

### Description of Embodiments

An embodiment of the present invention will be described below in detail, referring to the accompanying drawings. In the present specification and drawings, duplicate descriptions will be omitted by giving the same reference numerals to components having substantially the same functional configurations.

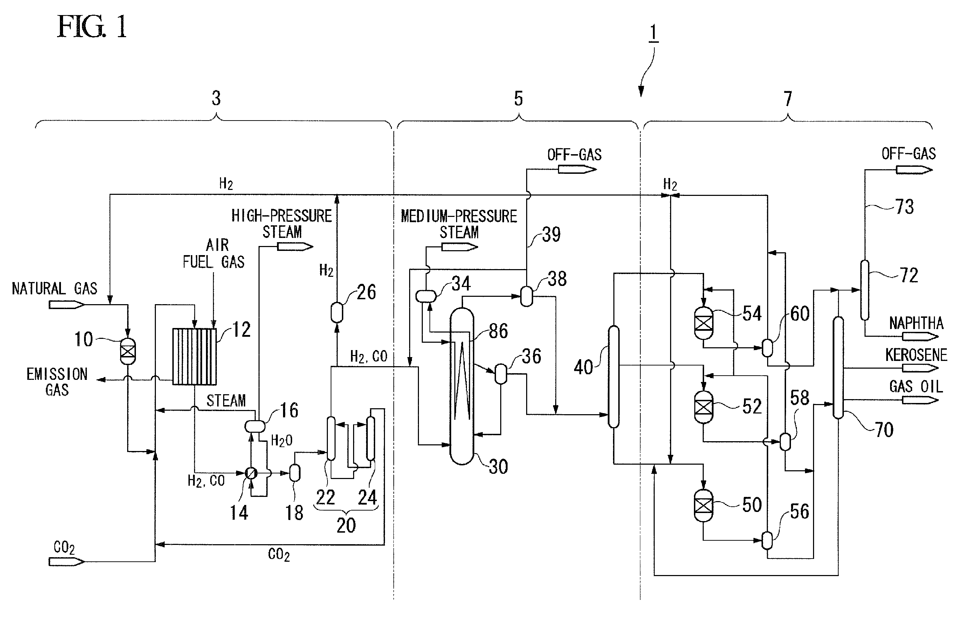

First, with reference to FIG. 1, the overall configuration and process of a liquid fuel synthesizing system 1 which carries out a GTL (Gas To Liquids) process according to the present embodiment will be described. FIG. 1 is a schematic view showing the overall configuration of the liquid fuel synthesizing system 1 according to the present embodiment.

As shown in FIG. 1, the liquid fuel synthesizing system 1 according to the present embodiment is a plant facility which carries out the GTL process which converts a hydrocarbon feedstock, such as a natural gas, into liquid fuels. This liquid fuel synthesizing system 1 includes a synthesis gas production unit 3, an FT synthesis unit 5, and an upgrading unit 7. The synthesis gas production unit 3 reforms a natural gas, which is a hydrocarbon feedstock, to produce a synthesis gas containing a carbon monoxide gas and a hydrogen gas. The FT synthesis unit 5 produces liquid hydrocarbons from the produced synthesis gas by the FT synthesis reaction. The upgrading unit 7 hydroprocesses and refines the liquid hydrocarbons produced by the FT synthesis reaction to produce liquid fuel products (naphtha, kerosene, gas oil, wax, etc.). Hereinafter, components of each of these units will be described.

First, the synthesis gas production unit 3 will be described. The synthesis gas production unit 3 mainly includes, for example, a desulfurizing reactor 10, a reformer 12, a waste heat boiler 14, vapor-liquid separators 16 and 18, a CO₂ removal unit 20, and a hydrogen separator 26. The desulfurizing reactor 10 is composed of a hydrodesulfurizer, etc., and removes sulfur components from a natural gas as a feedstock. The reformer 12 reforms the natural gas supplied from the desulfurizing reactor 10, to produce a synthesis gas containing a carbon monoxide gas (CO) and a hydrogen gas (H₂) as the main components. The waste heat boiler 14 recovers waste heat of the synthesis gas produced in the reformer 12, to produce a high-pressure steam. The vapor-liquid separator 16 separates the water heated by the heat exchange with the synthesis gas in the waste heat boiler 14 into a vapor (high-pressure steam) and a liquid. The vapor-liquid separator 18 removes condensate from the synthesis gas cooled down in the waste heat boiler 14, and supplies a gas to the CO₂ removal unit 20. The CO₂ removal unit 20 has an absorption tower 22 which removes a carbon dioxide gas by using an absorbent from the synthesis gas supplied from the vapor-liquid separator 18, and a regeneration tower 24 which strips the carbon dioxide gas and regenerates the absorbent containing the carbon dioxide gas. The hydrogen separator 26 separates a portion of the hydrogen gas contained in the synthesis gas, the carbon dioxide gas of which has been separated by the CO₂ removal unit 20. It is to be noted herein that the above CO₂ removal unit 20 may not be provided depending on circumstances.

Among them, the reformer 12 reforms a natural gas by using a carbon dioxide and a steam to produce a high-temperature synthesis gas containing a carbon monoxide gas and a hydrogen gas as the main components, using a steam and carbon-dioxide-gas reforming method expressed by the following chemical reaction formulas (1) and (2). In addition, the reforming method in this reformer 12 is not limited to the example of the above steam and carbon-dioxide-gas reforming method. For example, a steam reforming method, a partial oxidation reforming method (POX) using oxygen, an autothermal reforming method (ATR) that is a combination of the partial oxidation method and the steam reforming method, a carbon-dioxide-gas reforming method, and the like can also be utilized.

CH₄ + H₂O → CO + 3H₂ (1)

CH₄ + CO₂ → 2CO + 2H₂ (2)

Additionally, the hydrogen separator 26 is provided on a line branching from a main line which connects the CO₂ removal unit 20 or vapor-liquid separator 18 with the bubble column reactor 30. This hydrogen separator 26 can be composed of, for example, a hydrogen PSA (Pressure Swing Adsorption) device which performs adsorption and desorption of hydrogen by using a pressure difference. This hydrogen PSA device has adsorbents (zeolitic adsorbent, activated carbon, alumina, silica gel, etc.) within a plurality of adsorption towers (not shown) which are arranged in parallel. By sequentially repeating processes including pressurizing, adsorption, desorption (pressure reduction), and purging of hydrogen in each of the adsorption towers, a high-purity (for example, about 99.999%) hydrogen gas separated from the synthesis gas can be continuously supplied to a reactor.

In addition, the hydrogen gas separating method in the hydrogen separator 26 is not limited to the example of the pressure swing adsorption method as in the above hydrogen PSA device. For example, the method may be a hydrogen storing alloy adsorption method, a membrane separation method, or a combination thereof.

The hydrogen storing alloy method is, for example, a technique of separating hydrogen gas using a hydrogen storing alloy (TiFe, LaNi₅, TiFe_{0.7-0.9}, Mn_{0.3}-_{0.1}, TiMn_{1.5}, etc.) having a property which adsorbs or releases a hydrogen by being cooled or heated respectively. By providing a plurality of adsorption towers in which a hydrogen storing alloy is contained, and alternately repeating, in each of the adsorption towers, adsorption of hydrogen by cooling of the hydrogen storing alloy and release of a hydrogen by heating of the hydrogen storing alloy, hydrogen gas in the synthesis gas can be separated and recovered.

Additionally, the membrane separation method is a technique of separating hydrogen gas having high membrane permeability out of a mixed gas, using a membrane made of a polymeric material, such as aromatic polyimide. Since this membrane separation method is not accompanied with a phase change, less energy for running is required, and the running cost thereof is low. Additionally, since the structure of a membrane separation device is simple and compact, the facility cost is low and the required area of the facility is reduced. Moreover, since there is no driving device in a separation membrane, and a stable running range is large, there is an advantage in that maintenance is easy.

Next, the FT synthesis unit 5 will be described. The FT synthesis unit 5 mainly includes, for example, the bubble column reactor 30, a vapor-liquid separator 34, a separator 36, a vapor-liquid separator 38, and a first fractionator 40. The bubble column reactor 30 synthesizes liquid hydrocarbons using the FT synthesis reaction from the synthesis gas prepared in the above synthesis gas production unit 3, i.e., a carbon monoxide gas and a hydrogen gas. The vapor-liquid separator 34 separates the water flowed and heated through the heat transfer pipe 32 disposed within the bubble column reactor 30 into a steam (medium-pressure steam) and a liquid. The separator 36 is connected to a middle part of the bubble column reactor 30 to separate a catalyst and a liquid hydrocarbon product. The vapor-liquid separator 38 is connected to the top of the bubble column reactor 30 to cool down an unreacted synthesis gas and gaseous hydrocarbon products. The first fractionator 40 fractionally distills the FT synthesis hydrocarbons, which are supplied via the separator 36 and the vapor-liquid separator 38 from the bubble column reactor 30, into respective fractions according to boiling points.

Among them, the bubble column reactor 30, which is an example of a reactor which synthesizes liquid hydrocarbons from a synthesis gas, functions as an FT synthesis reactor which synthesizes liquid hydrocarbons from synthesis gas by the FT synthesis reaction. This bubble column reactor 30 is composed of, for example, a bubble column slurry bed type reactor in which slurry consisting of a catalyst and medium oil is contained inside a column vessel. This bubble column reactor 30 synthesizes liquid hydrocarbons from synthesis gas by the FT synthesis reaction. In detail, the synthesis gas supplied to the bubble column reactor 30 passes through the slurry consisting of a catalyst and medium oil, and in a suspended state, a hydrogen gas and a carbon monoxide gas react with each other to synthesize hydrocarbons, as shown in the following chemical reaction formula (3).

2nH₂ + nCO → (̵CH2)̵ₙ + nH₂O (3)

Since this FT synthesis reaction is an exothermic reaction, the bubble column reactor 30, which is a heat exchanger type reactor within which the heat transfer pipe 32 is disposed, is adapted such that, for example, water (BFW: Boiler Feed Water) is supplied as a coolant so that the reaction heat of the above FT synthesis reaction can be recovered as a medium-pressure steam by the heat exchange between the slurry and the water.

Finally, the upgrading unit 7 will be described. The upgrading unit 7 includes, for example, a wax fraction hydrocracking reactor 50, a middle distillate hydrotreating reactor 52, a naphtha fraction hydrotreating reactor 54, vapor-liquid separators 56, 58, and 60, a second fractionator 70, and a naphtha stabilizer 72.

The wax fraction hydrocracking reactor 50 is connected to the bottom of the first fractionator 40. The middle distillate hydrotreating reactor 52 is connected to a middle part of the first fractionator 40. The naphtha fraction hydrotreating reactor 54 is connected to the top of the first fractionator 40.

The vapor-liquid separators 56, 58 and 60 are provided so as to correspond to the hydroprocessing reactors 50, 52 and 54, respectively. The second fractionator 70 separates and refines the liquid hydrocarbons supplied from the vapor-liquid separators 56 and 58 according to boiling points. The naphtha stabilizer 72 distills liquid hydrocarbons of a naphtha fraction supplied from the vapor-liquid separator 60 and the second fractionator 70, to discharge butane and components lighter than butane as a off-gas, and to recover components having a carbon number of five or more as a naphtha product.

Next, a process (GTL process) of synthesizing liquid fuels from a natural gas using the liquid fuel synthesizing system 1 configured as above will be described.

A natural gas (the main component of which is CH₄) as a hydrocarbon feedstock is supplied to the liquid fuel synthesizing system 1 from an external natural gas supply source (not shown), such as a natural gas field or a natural gas plant. The above synthesis gas production unit 3 reforms this natural gas to produce a synthesis gas (mixed gas containing a carbon monoxide gas and a hydrogen gas as main components).

Specifically, first, the above natural gas is supplied to the desulfurizing reactor 10 along with the hydrogen gas separated by the hydrogen separator 26. The desulfurizing reactor 10 converts sulfur components contained in the natural gas using the hydrogen gas into hydrogen sulfide by a hydrodesulfurization catalyst, and adsorbs and removes the produced hydrogen sulfide by a desulfurizing agent, such as ZnO. By desulfurizing a natural gas in advance in this way, the activity of catalysts used in the reformer 12, the bubble column reactor 30 and so on, can be prevented from being reduced due to sulfur.

The natural gas (which may also contain a carbon dioxide) desulfurized in this way is supplied to the reformer 12 after the carbon dioxide (CO₂) gas supplied from a carbon-dioxide supply source (not shown) and the steam generated in the waste heat boiler 14 are mixed therewith. The reformer 12 reforms a natural gas by using a carbon dioxide and a steam to produce a high-temperature synthesis gas containing a carbon monoxide gas and a hydrogen gas as the main components, by the above steam and carbon-dioxide-gas reforming method. At this time, the reformer 12 is supplied with, for example, a fuel gas for a burner disposed in the reformer 12 and air, and the reaction heat required for the above steam and CO₂ reforming reaction which is an endothermic reaction is provided with the heat of combustion of the fuel gas in the burner.

The high-temperature synthesis gas (for example, 900°C, 2.0 MPaG) produced in the reformer 12 in this way is supplied to the waste heat boiler 14, and is cooled down by the heat exchange with the water which flows through the waste heat boiler 14 (for example, 400°C), thus the waste heat is recovered. At this time, the water heated by the synthesis gas in the waste heat boiler 14 is supplied to the vapor-liquid separator 16. From this vapor-liquid separator 16, a gas component is supplied to the reformer 12 or other external apparatuses as a high-pressure steam (for example, 3.4 to 10.0 MPaG), and water as a liquid component is returned to the waste heat boiler 14.

Meanwhile, the synthesis gas cooled down in the waste heat boiler 14 is supplied to the absorption tower 22 of the CO₂ removal unit 20, or the bubble column reactor 30, after a condensate is separated and removed from the synthesis gas in the vapor-liquid separator 18. The absorption tower 22 absorbs a carbon dioxide gas contained in the synthesis gas into the retained absorbent, to separate the carbon dioxide gas from the synthesis gas. The absorbent containing the carbon dioxide gas within this absorption tower 22 is introduced into the regeneration tower 24, the absorbent containing the carbon dioxide gas is heated and subjected to stripping treatment with, for example, a steam, and the resulting stripped carbon dioxide gas is brought to the reformer 12 from the regeneration tower 24, and is reused for the above reforming reaction.

The synthesis gas produced in the synthesis gas production unit 3 in this way is supplied to the bubble column reactor 30 of the above FT synthesis unit 5. At this time, the composition ratio of the synthesis gas supplied to the bubble column reactor 30 is adjusted to a composition ratio (for example, H₂:CO=2:1 (molar ratio)) suitable for the FT synthesis reaction. In addition, the pressure of the synthesis gas supplied to the bubble column reactor 30 is raised to a pressure (for example, about 3.6 MPaG) suitable for the FT synthesis reaction by a compressor (not shown) provided in a line which connects the CO₂ removal unit 20 with the bubble column reactor 30.

Additionally, a portion of the synthesis gas, the carbon dioxide gas of which has been separated by the above CO₂ removal unit 20, is also supplied to the hydrogen separator 26. The hydrogen separator 26 separates the hydrogen gas contained in the synthesis gas, by the adsorption and desorption utilizing a pressure difference (hydrogen PSA) as described above. This separated hydrogen is continuously supplied from, for example, a gas holder (not shown) via a compressor (not shown) to various hydrogen-utilizing reaction apparatuses (for example, the desulfurizing reactor 10, the wax fraction hydrocracking reactor 50, the middle distillate hydrotreating reactor 52, the naphtha fraction hydrotreating reactor 54, etc.) which perform predetermined reactions, utilizing the hydrogen within the liquid fuel synthesizing system 1.

Next, the above FT synthesis unit 5 synthesizes liquid hydrocarbons using the FT synthesis reaction from the synthesis gas produced by the above synthesis gas production unit 3.

Specifically, the synthesis gas from which the carbon dioxide gas has been separated in the above CO₂ removal unit 20 flows into the bubble column reactor 30, and passes through the catalyst slurry contained in the bubble column reactor 30. At this time, within the bubble column reactor 30, the carbon monoxide and hydrogen gas which are contained in the synthesis gas react with each other by the aforementioned FT synthesis reaction, thereby producing hydrocarbons. Moreover, by flowing water through the heat transfer pipe 32 of the bubble column reactor 30 at the time of this synthesis reaction, the reaction heat of the FT synthesis reaction is removed, and the water heated by this heat exchange is vaporized into a steam. This steam is supplied to the vapor-liquid separator 34 and separated into condensed water and a gas fraction, the water is returned to the heat transfer pipe 32, and the gas component is supplied to external apparatuses as a medium-pressure steam (for example, 1.0 to 2.5MPaG).

The liquid hydrocarbons synthesized in the bubble column reactor 30 in this way are drawn from the middle part of the bubble column reactor 30 as a slurry including catalyst particles, and are introduced to the separator 36. The separator 36 separates the drawn slurry into a catalyst (solid component) and a liquid component including a liquid hydrocarbon product. A portion of the separated catalyst is supplied to the bubble column reactor 30, and the liquid component is supplied to the first fractionator 40. From the top of the bubble column reactor 30, an unreacted synthesis gas, and a gas component of the produced hydrocarbons are introduced into the vapor-liquid separator 38. The vapor-liquid separator 38 cools down these gases to separate some condensed liquid hydrocarbons to introduce them into the first fractionator 40. Meanwhile, a portion of the gas component separated in the vapor-liquid separator 38 is put into the bubble column reactor 30 again, and the unreacted synthesis gases (CO and H₂) contained in this gas component is reused for the FT synthesis reaction. Further, the off gas other than target products, containing as a main component hydrocarbon gas having a small carbon number (C₄ or less), is used as fuel gas, or fuels equivalent to LPG (Liquefied Petroleum Gas) are recovered.

Next, the first fractionator 40 fractionally distills the FT synthesis hydrocarbons (the carbon numbers of which are various), which are supplied via the separator 36 and the vapor-liquid separator 38 from the bubble column reactor 30 as described above, into a naphtha fraction (the boiling point of which is lower than about 150°C), a middle distillate (the boiling point of which is about 150 to 360°C), and a wax fraction (the boiling point of which exceeds about 360°C). The liquid hydrocarbons as the wax fraction (mainly C₂₁ or more) drawn from the bottom of the first fractionator 40 are brought to the wax fraction hydrocracking reactor 50, the liquid hydrocarbons as the middle distillate equivalent to kerosene and gas oil (mainly C₁₁ to C₂₀) drawn from the middle part of the first fractionator 40 are brought to the middle distillate hydrotreating reactor 52, and the liquid hydrocarbons as the naphtha fraction (mainly C₅ to C₁₀) drawn from the top of the first fractionator 40 are brought to the naphtha fraction hydrotreating reactor 54.

The wax fraction hydrocracking reactor 50 hydrocracks the liquid hydrocarbons as the wax fraction with a large carbon number (approximately C₂₁ or more), which has been supplied from the bottom of the first fractionator 40, by using the hydrogen gas supplied from the above hydrogen separator 26, in order to reduce the carbon number to C₂₀ or less. In this hydrocracking reaction, the wax fraction is converted into hydrocarbons with a small carbon number by cleaving C-C bonds of hydrocarbons with a large carbon number, using a catalyst and heat. Additionally, in the wax fraction hydrocracking reactor 50, the reaction which hydroisomerizes straight chain saturated hydrocarbons (normal paraffins) to produce branched saturated hydrocarbons (isoparaffins) also proceeds simultaneously with the hydrocracking reaction. This improves the low-temperature fluidity of a wax fraction hydrocracking product which is required as a fuel-oil base stock. Moreover, in the wax fraction hydrocracking reactor 50, a hydrodeoxygenation reaction of oxygen-containing compounds, such as alcohols, and a hydrogenation reaction of olefins, both of which are contained in a feedstock wax fraction, also proceed. A product including the liquid hydrocarbons hydrocracked in this wax fraction hydrocracking reactor 50 is separated into a gas and liquid in the vapor-liquid separator 56, the liquid hydrocarbons of which are brought to the second fractionator 70, and the gas component (including hydrogen gas) of which is brought to the middle distillate hydrotreating reactor 52 and the naphtha fraction hydrotreating reactor 54.

The middle distillate hydrotreating reactor 52 hydrotreats the liquid hydrocarbons as the middle distillate equivalent to kerosene and gas oil having an approximately middle carbon number (approximately C₁₁ to C₂₀), which have been fractionally distilled in the first fractionator 40 and drawn from the middle part thereof, by using the hydrogen gas supplied via the wax fraction hydrocracking reactor 50 from the hydrogen separator 26. In this hydrotreating reaction, the olefins contained in the above liquid hydrocarbons is hydrogenated to produce saturated hydrocarbons, and the oxygen-containing compounds, such as alcohols contained in the above liquid hydrocarbons are hydrodeoxygenated and converted into saturated hydrocarbons and water. Moreover, in this hydrotreating reaction, a hydroisomerization reaction which isomerizes straight chain saturated hydrocarbons (normal paraffins) to convert the saturated hydrocarbons into branched saturated hydrocarbons (isoparaffins) proceeds, and the low-temperature fluidity of the produced oil which is required as a fuel oil is improved. A product including the hydrotreated liquid hydrocarbons is separated into a gas and a liquid in the vapor-liquid separator 58, the liquid hydrocarbons of which are brought to the second fractionator 70, and the gas component ( containing a hydrogen gas) of which is reused for the above hydroprocessing reactions.

The naphtha fraction hydrotreating reactor 54 hydrotreats liquid hydrocarbons as the naphtha fraction with a low carbon number (approximately C₁₀ or less), which have been fractionally distilled in the first fractionator 40 and drawn from the upper part thereof, by using the hydrogen gas supplied via the wax fraction hydrocracking reactor 50 from the hydrogen separator 26. As a result, a product including the hydrotreated liquid hydrocarbons is separated into gas and liquid in the vapor-liquid separator 60, the liquid hydrocarbons of which are brought to the naphtha stabilizer 72, and the gas component ( containing a hydrogen gas) of which is reused for the above hydroprocessing reactions. In this naphtha fraction hydrotreating, it is primarily hydrogenation of olefins and hydrodeoxygenation of oxygen-containing compounds, such as alcohols, that proceed.

Next, the second fractionator 70 fractionally distills the liquid hydrocarbons, which are supplied from the wax fraction hydrocracking reactor 50 and the middle distillate hydrotreating reactor 52 as described above, into hydrocarbons with a carbon number of C₁₀ or less (the boiling point of which is lower than about 150°C), a kerosene fraction (the boiling point of which is about 150 to 250°C), a gas oil fraction (the boiling point of which is about 250 to 360°C), and an uncracked wax fraction (the boiling point of which exceeds 360°C) from the wax fraction hydrocracking reactor 50. The uncracked wax fraction is obtained from the bottom of the second fractionator 70, and is recycled to the upstream of the wax fraction hydrocracking reactor 50. Kerosene and gas oil fractions are drawn from the middle part of the second fractionator 70. Meanwhile, a hydrocarbon gas of C₁₀ or less is drawn from the top of the second fractionator 70, and is supplied to the naphtha stabilizer 72.

Moreover, the naphtha stabilizer 72 distills the hydrocarbons of C₁₀ or less, which have been supplied from the above naphtha fraction hydrotreating reactor 54 and the top of the second fractionator 70, and thereby, obtains naphtha (C₅ to C₁₀) as a product. Accordingly, high-purity naphtha is drawn from the bottom of the naphtha stabilizer 72. Meanwhile, the off-gas other than products, which includes as a main component hydrocarbons with a carbon number lower than or equal to a predetermined number (C₄ or less), is discharged from the top of the naphtha stabilizer 72. This off-gas is used as a fuel gas, or is recovered as a fuel equivalent to LPG.

The process (GTL process) of the liquid fuel synthesizing system 1 has been described hitherto. By this GTL process, natural gas can be easily and economically converted into clean liquid fuels, such as high-purity naphtha (C₅ to C₁₀), kerosene (C₁₁ to C₁₅), and gas oil (C₁₆ to C₂₀). Moreover, in the present embodiment, the above steam and carbon-dioxide-gas reforming method is adopted in the reformer 12. Thus, there are advantages in that a carbon dioxide contained in a natural gas to be used as a feedstock can be effectively utilized, the composition ratio (for example, H₂:CO=2:1 (molar ratio)) of a synthesis gas suitable for the above FT synthesis reaction can be efficiently produced by one reaction in the reformer 12, and a hydrogen concentration adjustor and so on is unnecessary.

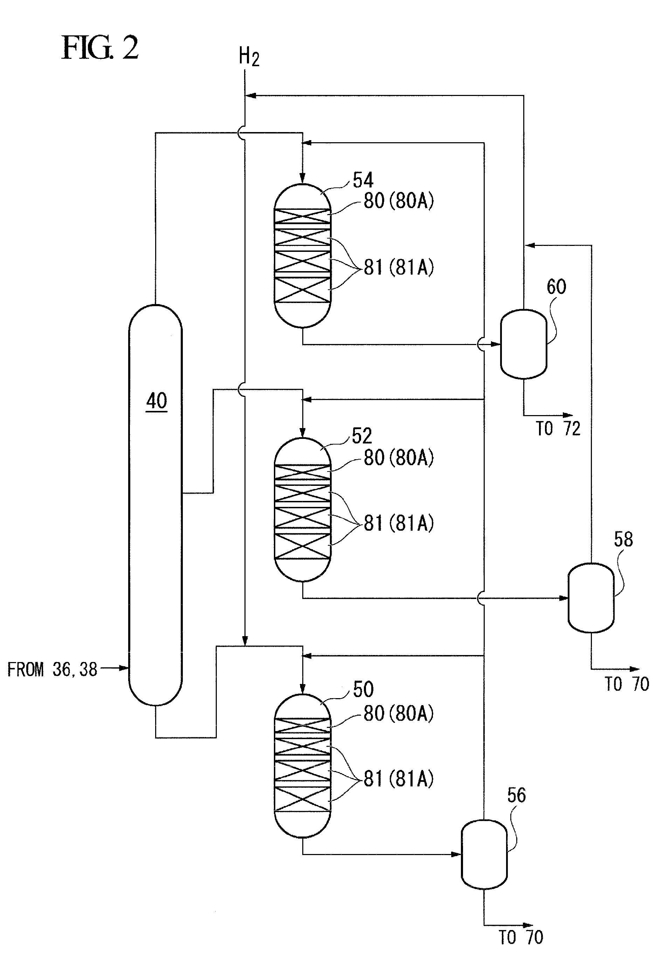

Next, the configuration of the wax fraction hydrocracking reactor 50, the middle distillate hydrotreating reactor 52, and the naphtha fraction hydrotreating reactor 54 will be described with reference to FIG. 2.
As shown in this drawing, the wax fraction hydrocracking reactor 50, the middle distillate hydrotreating reactor 52, and the naphtha fraction hydrotreating reactor 54 have a pretreatment apparatus 80 and a hydrotreating apparatus 81, respectively.

Each pretreatment apparatus 80 has a catalyst 80A for the pretreatment.
The catalyst 80A for the pretreatment according to the present invention converts a carbon monoxide gas contained in each fraction obtained by the fractional distillation of the FT synthesis hydrocarbons in the first fractionator 40 into methane gas by a methanation reaction shown in a chemical reaction formula (4), thereby suppressing adsorption poisoning of the hydroprocessing catalyst 81A caused by the carbon monoxide gas to make it possible to extend the lifetime of the catalyst.

CO+3H₂→CH₄+H₂O (4)

In a pretreatment according to the present invention, in order to convert the carbon monoxide gas contained in the FT synthesis hydrocarbons into methane by the methanation reaction, a hydrogen gas is supplied to the pretreatment. It is preferable that the hydrogen gas is superabundantly supplied with respect to the carbon monoxide gas. Generally, the hydrogen gas needed for the hydroprocessing of the FT synthesis hydrocarbons is supplied to the pretreatment where a portion of the hydrogen gas is used for the methanation reaction, and the unreacted hydrogen gas is supplied to a hydroprocessing along with the pretreated FT synthesis hydrocarbons, and is provided for the hydroprocessing.

The hydrogen gas which has been supplied to the wax fraction hydrocracking reactor 50 from the hydrogen separator 26 not to react in the reactor, is separated in the vapor-liquid separator 56 , and is supplied to the middle distillate hydrotreating reactor 52 and the naphtha fraction hydrotreating reactor 54. Further, the unreacted hydrogen gas in the middle distillate hydrotreating reactor 52 and the naphtha fraction hydrotreating reactor 54 is separated in the vapor-liquid separators 58 and 60, respectively, is recycled to the wax fraction hydrocracking reactor 50.

The catalyst 80A for the pretreatment according to the present invention also makes it possible to convert the oxygen-containing compounds, such as alcohols contained in each fraction, into hydrocarbons and water by the hydrodeoxygenation reaction, as shown in a chemical reaction formula (5). When each fraction containing the oxygen-containing compounds is subjected to the hydroprocessing without the pretreatment, it is believed that a portion of the water which has been generated as a by-product in the hydroprocessing apparatus 81 is adsorbed on the hydroprocessing catalyst 81A, which causes the poisoning of the catalyst. Accordingly, it is believed that the poisoning of the hydroprocessing catalyst 81A is suppressed by performing the hydrodeoxygenation reaction of the oxygen-containing compounds in the pretreatment, and feeding the by-product water to the subsequent-stage hydroprocessing apparatus 81 as a gas (steam).

R-OH+H₂→R-H+H₂O (5)

The catalyst 80A for the pretreatment according to the present invention is a catalyst in which at least one kind of metal selected from the metals of Groups 6, 7, 8, 9, 10, 11, and 14 of the Periodic Table is supported on a carrier.
Molybdenum (Mo) and tungsten (W) are preferable as Group 6 metals. Rhenium (Re) is preferable as Group 7 metal. Ruthenium (Ru) is preferable as Group 8 metal. Cobalt (Co) is preferable as Group 9 metal. Ni (nickel) is preferable as Group 10 metal. Copper (Cu) is preferable as Group 11 metal. Tin (Sn) is preferable as Group 14 metal. Among these metals, Ru, Ni, and Cu are more preferable, and the use of Ru is particularly preferable because the amount of metal supported can be reduced.

The amount of ruthenium supported is preferably within a range of 0.05 mass% or more and 10.0 mass% or less with respect to the total mass of the catalyst for the pretreatment and the amount of ruthenium supported is more preferably 0.1 mass% or more. Additionally, the amount of ruthenium supported is more preferably 5.0 mass% or less, still more preferably 1.0 mass% or less, and most preferably 0.5 mass% or less. If the amount of ruthenium supported exceeds 10 mass%, this is not preferable because CO₂ which coexists in the FT synthesis hydrocarbons is ready to undergo a methanation reaction to lower the selectivity , and the removal effect of CO becomes insufficient. If the amount of ruthenium supported is less than 0.05 mass%, this is not preferable because there is a possibility that the methanation reaction shown by the reaction formula (4) will not sufficiently proceed, and the poisoning of the hydroprocessing catalyst caused by the carbon monoxide gas cannot be suppressed.
Additionally, Mo, W, Re, and Sn are preferably used along with at least one kind of metal selected from Ru, Ni, Co, and Cu.

Additionally, in the catalyst 80A for the pretreatment according to the present invention, it is preferable that the noble metals of Group 9 or 10 of the Periodic Table are further supported in order to convert the oxygen-containing compounds, such as alcohols contained in the FT synthesis hydrocarbons, into saturated hydrocarbons and water by the hydrodeoxygenation reaction. This can suppress the poisoning of the hydroprocessing catalyst caused by liquid phase water which is generated as a by-product, in the hydroprocessing of the FT synthesis hydrocarbons. Rhodium (Rh) and iridium (lr) are preferable as the noble metals of Group 9 of the Periodic Table, and palladium (Pd) and platinum (Pt) are preferable as the noble metals of Group 10. Among these, the use of platinum is preferable because platinum has high hydrodeoxygenation activity with a small amount of metal supported.

The amount of platinum supported is preferably within a range of 0.05 mass% or more and 10.0 mass% or less with respect to the total mass of the catalyst for the pretreatment and the amount of platinum supported is more preferably 0.1 mass% or more. Additionally, the amount of platinum supported is more preferably 5.0 mass% or less, still more preferably 3.0 mass% or less, and most preferably 1.0 mass% or less. Even when the amount of platinum supported is made greater than 10 mass%, this is not preferable because further improvements in activity against the hydrodeoxygenation reaction of oxygen-containing compounds, such as alcohols, are difficult while the cost increases. On the other hand, when the amount of platinum supported is less than 0.05 mass%, this is not preferable because there is a possibility that the hydrodeoxygenation reaction of oxygen-containing compounds as shown by the reaction formula (5) will not sufficiently proceed.

In addition, the methods for loading these metals are not particularly limited, and the metals can be loaded on carriers which will be described later by conventional methods, such as an impregnation method and an ion exchange method. Additionally, as compounds including these metals that are used while loading, salts, complexes, and so on of these metals are preferably used.

Moreover, although the carriers which constitute the catalyst 80A for the pretreatment according to the present invention are not particularly limited, alumina, silica, silica alumina, boria, magnesia, or composite oxides thereof can be mentioned, among them, alumina can be preferably used, and γ-alumina is more preferably used. The carriers can be produced by calcination after molding, and the calcinating temperature of the carriers is preferably within a range of 400 to 550°C, more preferably within a range of 470 to 530°C, and still more preferably within a range of 490 to 530°C.

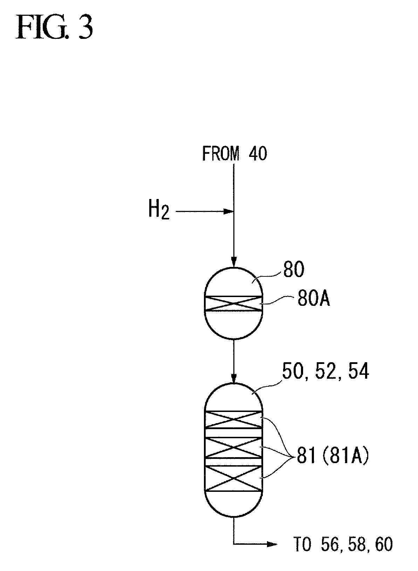

Each pretreatment apparatus 80 is arranged at upstream of the respective hydroprocessing apparatus 81 in the flowing direction of each fraction. Each pretreatment apparatus 80 may be provided integrally with each hydroprocessing apparatus 81 within one reactor, or as shown in FIG 3, each pretreatment apparatus 80 and each hydroprocessing apparatus 81 may be constructed with separate reactors.

Although the conditions of the pretreatment are not particularly limited, the pretreatment can be performed under the following reaction conditions. As the partial pressure of hydrogen, 0.5 to 12 MPa is mentioned as a preferable range, and 1.0 to 5.0 MPa is still more preferable. As the liquid hourly space velocity (LHSV) of each fraction, 0.1 to 10.0 h⁻¹ is mentioned as a preferable range, and 0.3 to 3.5 h⁻¹ is still more preferable. As the hydrogen/oil ratio, 50 to 1000 NL/L is mentioned as a preferable range, and 70 to 800 NL/L is still more preferable.

Additionally, as the reaction temperature in the pretreatment, 180 to 400°C is mentioned as a preferable range, 200 to 370°C is more preferable, 250 to 350°C is still more preferable, and 280 to 350°C is further more preferable. If the reaction temperature exceeds 400°C, this is not preferable because not only does a side reaction of being decomposed to a light fraction increase to lower the yield of a middle distillate , but also a product becomes colored to limit the use as a fuel base stock. Additionally, if the reaction temperature falls below 180°C, this is not preferable because the removal of the oxygen-containing compounds, such as alcohosl, becomes insufficient.

Each hydroprocessing apparatus 81 is packed with the hydroprocessing catalyst 81A. The hydroprocessing catalyst 81A is suitably selected so as to be suitable for the purposes of hydroprocessing of the respective fractions (hydrocracking, hydroisomerization, and hydrotreating), and the catalysts in the respective hydroprocessing apparatuses may be the same or may be different.

In a step where the wax fraction (the boiling point of which exceeds about 360°C) drawn from the bottom of the first fractionator 40 is hydroprocessed in the wax fraction hydrocracking reactor 50, a hydrocracking reaction which produces hydrocarbons with a low carbon number and a low molecular weight is mainly performed by cleaving C-C bonds of hydrocarbons with a large carbon number. A hydrocracking catalyst which will be described later are used as the hydroprocessing catalyst in this case.

In addition, a well-known fixed bed reactor can be used as the wax fraction hydrocracking reactor 50. In the present embodiment, in a single fixed bed flow type reactor, a predetermined hydrocracking catalyst is packed, as a hydroprocessing catalyst 81A, after (downstream of) the stage where the aforementioned catalyst 80A for the pretreatment is packed, and the wax fraction obtained from the first fractionator 40 is hydrocracked.

The hydrocracking catalyst includes, for example, a catalyst in which a metal of Groups 8 to 10 of the Periodic Table as an active metal is supported on a carrier comprising solid acids.

Carriers comprising one kind or more of solid acid selected from crystalline zeolites, such as ultra-stable Y type (USY) zeolite, HY zeolite, mordenite, and β zeolite, and refractory amorphous metal oxides , such as silica alumina, silica zirconia, and alumina boria, are suitable ones. Moreover, it is more preferable that the carriers comprise USY zeolite and one kind or more of solid acid selected from silica alumina, alumina boria, and silica zirconia, and it is still more preferable that the carriers comprise USY zeolite and silica alumina.

The USY zeolite is a one obtained by ultra-stabilization of a Y-type zeolite by hydrothermal treatment and/or acid treatment, and is given newly formed pores within a range of 20 to 100 Å in addition to the fine pore structure called micropores of 20Å or less that the Y-type zeolite originally has. In a case where the USY zeolite is used as a carrier of the hydrocracking catalyst, there is no particular restriction to the mean particle diameter. However, the mean particle diameter is preferably 1.0µm or less, and more preferably, 0.5 µm or less. Additionally, in the USY zeolite, the molar ratio of silica/alumina (the molar ratio of silica to alumina; hereinafter referred to as "silica/alumina ratio") is preferably 10 to 200, more preferably 15 to 100, and further more preferably 20 to 60.

Additionally, the carriers are preferably ones comprising a crystalline zeolite of 0.1 mass% to 80 mass%, and a refractory amorphous metal oxide of 0.1 mass% to 60 mass%.

The carriers can be produced by molding a mixture containing the above solid acids and a binder, and then calcining the the molded mixture. The blending rate of the solid acid is preferably 1 to 70 mass% and more preferably 2 to 60 mass%, on the basis of the total quantity of a carrier. Additionally, in a case where a carrier contains USY zeolite, the blending amount of the USY zeolite is preferably 0.1 to 10 mass% and more preferably 0.5 to 5 mass% on the basis of the total mass of a carrier. Moreover, in a case where a carrier contains USY zeolite and alumina boria, the blending ratio between USY zeolite and alumina boria (USY zeolite/alumina boria) is preferably 0.03 to 1 by mass ratio. Additionally, in a case where a carrier contains USY zeolite and silica alumina, the blending ratio between the USY zeolite and silica alumina (USY zeolite/silica alumina) is preferably 0.03 to 1 by mass ratio.

Although the binder is not particularly limited, alumina, silica, silica alumina, titania, and magnesia are preferable, and alumina is more preferable. The blending amount of the binder is preferably 20 to 98 mass% and more preferably 30 to 96 mass% on the basis of the total mass of a carrier.

Calcining temperature of the mixture is preferably within a range of 400 to 550°C, more preferably within a range of 470 to 530°C, and still more preferably within a range of 490 to 530°C.

The metals of Groups 8 to 10 of the Periodic Table specifically include Co, Ni, Rh, Pd, Ir, Pt, etc. Among them, it is preferable that one kind of metal selected from Ni, Pd, and Pt is singularly used, or that two kinds or more thereof are used in combinations.

These metals can be loaded on the aforementioned carriers by conventional methods, such as impregnation and ion exchange. Although the amount of a metal to be loaded is not particularly limited, it is preferable that the total mass of the metal to a carrier is 0.1 to 3.0 mass%. Additionally, as compounds containing these metals that are used when being loaded, salts, complexes, and so on of these metals are preferably used.

The hydrocracking of the wax fraction can be performed under the following reaction conditions. That is, the partial pressure of hydrogen includes 0.5 to 12 MPa, and 1.0 to 5.0 MPa is preferable. The liquid hourly space velocity (LHSV) of the wax fraction includes 0.1 to 10.0 h⁻¹, and 0.3 to 3.5 h⁻¹ is preferable. Although the hydrogen/oil ratio is not particularly limited, the hydrogen/oil ratio includes 50 to 1000 NL/L, and 70 to 800 NL/L is preferable.

Additionally, the reaction temperature in the hydrocracking includes 180 to 400°C, then 200 to 370°C is preferable, 250 to 350°C is more preferable, and 280 to 350°C is further more preferable. If the reaction temperature exceeds 400°C, this is not preferable because not only does a side reaction of being decomposed to a light fraction increase to lower the middle distillate yield , but also a product becomes colored limit the use as a fuel base stock. Additionally, if the reaction temperature falls below 180°C, this is not preferable because the oxygen-containing compounds, such as alcohols, remain without being removed.

In a step where the middle distillate (the boiling point of which is about 150 to 360°C) fractionally distilled in the first fractionator 40 and drawn from the middle part thereof is hydroprocessed in the middle distillate hydrotreating reactor 52, the hydroisomerization reaction which converts normal paraffins into isoparaffins, the hydrotreating reaction including the hydrogenation of the olefins and the hydrodeoxygenation reaction of the oxygen-containing compounds, such as alcohols, become the main reactions, while the hydrocracking reaction is suppressed because of lowering the middle distillate yield. As the hydroprocessing catalyst in this case, it is preferable to use a hydrotreating catalyst which will be described later.

In addition, a well-known fixed bed reactor can be used as the middle distillate hydrotreating reactor 52. In the present embodiment, in a single fixed bed flow type reactor, a predetermined hydrotreating catalyst is packed, as a hydroprocessing catalyst 81A, after (downstream of) the stage where the aforementioned catalyst 80A for the pretreatment is packed, and the middle distillate obtained from the first fractionator 40 is hydrotreated.

The hydrotreating catalyst includes, for example, catalysts in which a metal of Groups 8 to 10 of the Periodic Table is supported on a carrier containing solid acid, as a hydrogenation active metal.

Carriers containing one kind or more of solid acid selected from refractory amorphous metal oxides, such as silica alumina, silica zirconia, and alumina boria are suitable ones.

The carriers can be produced by molding a mixture containing the above solid acid and a binder, and then calcining the molded mixture. The blending rate of the solid acid is preferably 1 to 70 mass% and more preferably 2 to 60 mass% on the basis of the total mass of the carrier.

Although the binder is not particularly limited, alumina, silica, silica alumina, titania, and magnesia are preferable, and alumina is more preferable. The blending amount of the binder is preferably 30 to 99 mass% and more preferably 40 to 98 mass%, on the basis of the total mass of the carrier.

The calcining temperature of the mixture is preferably within a range of 400 to 550°C, more preferably within a range of 470 to 530°C, and still more preferably within a range of 490 to 530°C.

The metals of Groups 8 to 10 of the Periodic Table specifically include Co, Ni, Rh, Pd, Ir, Pt, etc. Among them, it is preferable that one kind of metals selected from Ni, Pd, and Pt is singularly used, or two kinds thereof are used in combinations.

These metals can be loaded on the aforementioned carriers by conventional methods, such as impregnation and ion exchange. Although the amount of the metal to be loaded is not particularly limited, it is preferable that the total mass of the metals to a carrier is 0.1 to 3.0 mass%. Additionally, as compounds containing these metals that are used when being loaded, salts, complexes, and so on of these metals are preferably used.

The hydrotreating of the middle distillate can be performed under the following reaction conditions. The partial pressure of hydrogen includes 0.5 to 12 MPa, and 1.0 to 5.0 MPa is preferable. The liquid hourly space velocity (LHSV) of the middle distillate includes 0.1 to 10.0 h⁻¹, and 0.3 to 3.5 h⁻¹ is preferable. Although the hydrogen/oil ratio is not particularly limited, the hydrogen/oil ratio includes 50 to 1000 NL/L, and 70 to 800 NL/L is preferable.

Additionally, the reaction temperature in the hydrotreating includes 180 to 400°C, then 200 to 370°C is preferable, 250 to 350°C is more preferable, and 280 to 350°C is further more preferable. If the reaction temperature exceeds 400°C, this is not preferable because not only does a side reaction of being decomposed to a light fraction increase, to lower the yield of a middle distillate , but also a product becomes colored to limit the use as a fuel base stock. Additionally, if the reaction temperature falls below 180°C, this is not preferable because the oxygen-containing compounds, such as alcohols, remain without being removed.

In a step where the naphtha fraction (the boiling point of which is lower than about 150°C) fractionally distilled in the first fractionator 40 and drawn from the top thereof is hydroprocessed in the naphtha fraction hydrotreating reactor 54, the hydrotreating reaction including the hydrogenation of the olefins and the hydrodeoxygenation of the oxygen-containing compounds, such as alcohols, becomes the main reaction. Because of relatively low molecular weight of the stock oil, hydroisomerization does not proceed much in the hydrotreating of the naphtha fraction. The same catalyst as the aforementioned hydrotreating catalyst used for the hydrotreating of the middle distillate can be used as the hydrotreating catalyst in this case.

In addition, a well-known fixed bed reactor can be used as the naphtha fraction hydrotreating reactor 54. In the present embodiment, in a single fixed bed flow type reactor, a predetermined hydrotreating catalyst is packed, as a hydroprocessing catalyst 81A, after (downstream of) the stage where the aforementioned catalyst 80A for the pretreatment is packed, and the naphtha fraction obtained from the first fractionator 40 is hydrotreated on the same conditions as the aforementioned hydrotreating of the middle distillate.

Additionally, a portion of the naphtha fraction which has been hydrotreated in this naphtha fraction hydrotreating reactor 54 is preferably recycled to the upstream of the naphtha fraction hydrotreating reactor 54. The naphtha fraction contains olefins and oxygen-containing compounds such as alcohols in high concentrations, the hydrogenation of these olefins and hydrodeoxygenation of these oxygen-containing compounds are reactions accompanied by the generation of a large amount of heat. In a case where only an unprocessed naphtha fraction is hydrotreated, there is a possibility that the temperature of the naphtha fraction may rise excessively in the naphtha fraction hydrotreating reactor 54. Thus, by recycling a portion of the naphtha fraction after the hydrotreating, an unprocessed naphtha fraction is diluted, and an excessive rise in temperature is prevented.

In addition, in the present specification, the "liquid hourly space velocity (LHSV)" means the volumetric flow rate of stock oil in the standard conditions (25°C and 101325 Pa) per capacity of a catalyst bed in which a catalyst is packed, and the unit "h⁻¹" represents the reciprocal of time (hour). Additionally, "NL" that is the unit of hydrogen capacity in hydrogen/oil ratio represents hydrogen capacity (L) in the normal conditions (0°C and 101325 Pa).

The technical scope of the present invention is not limited to the above embodiment, but various modifications may be made without departing from the spirit and scope of the present invention.
Although, in the above embodiment, the configuration has been described in which the pretreatment apparatus 80 and the hydroprocessing apparatus 81 are provided within the wax fraction hydrocracking reactor 50, the middle distillate hydrotreating reactor 52, and the naphtha fraction hydrotreating reactor 54, respectively, the present invention is not limited thereto.

For example, as shown in FIG. 3, the pretreatment apparatuses 80 may be provided independently from the wax fraction hydrocracking reactor 50, the middle distillate hydrotreating reactor 52, and the naphtha fraction hydrotreating reactor 54 respectively. In this case, as shown in this drawing, for example, a pretreatment reactor can be provided as the pretreatment apparatus at upstream of the wax fraction hydrocracking reactor 50, the middle distillate hydrotreating reactor 52, and the naphtha fraction hydrotreating reactor 54, respectively.

Moreover, although the configuration in which FT synthesis hydrocarbons is fractionally distilled into a naphtha fraction, a middle distillate, and a wax fraction, and the respective fractions are hydroprocessed after being subjected to the pretreatment has been shown in the above embodiment, a configuration may be adopted in which FT synthesis hydrocarbons are fractionally distilled into two fractions including a light fraction in which the naphtha fraction and the middle distillate are taken together, and a heavy fraction that is the wax fraction, and the respective fractions are hydroprocessed after being subjected to the pretreatment.

Additionally, although the configuration in which the pretreatment apparatus 80 is arranged at downstream of the first fractionator 40 has been described in the above embodiment, the present invention is not limited thereto. For example, a configuration may be adopted in which the pretreatment apparatus 80 is arranged at upstream of the first fractionator 40, and FT synthesis hydrocarbons which are not fractionally distilled may be pretreated in the pretreatment apparatus 80 constituted by a single reactor. However, in this embodiment, a step of vapor-liquid separation which separates a gas component containing the unreacted hydrogen gas among the hydrogen gas supplied to the pretreatment step as a main component and the FT synthesis hydrocarbons, and a step of supplying a hydrogen gas to the hydroprocessing steps are needed between the pretreatment step and the first fractionator 40.

### [Examples]

Although the present invention will be described below in more detail by way of examples, the present invention is not limited to these examples.

### < Catalyst Preparation>

### (Catalyst A)

A carrier was obtained by molding γ-alumina into a quadruple shape having a diameter of about 1.6 mm and a length of about 4 mm, and then calcining the resulting molded product for 1 hour at 500°C. Ruthenium and platinum were loaded on this carrier by impregnating a ruthenium nitrate aqueous solution and a chloroplatinic acid aqueous solution. Catalyst A was obtained by drying this metal-loaded carrier for 3 hours at 120°C, and then, calcining the metal-loaded carrier in air for 1 hour at 500°C. The amount of ruthenium supported was 0.1 mass% with respect to the carrier, and the amount of platinum supported was 0.8 mass% with respect to the carrier.

### (Catalyst B)

A carrier was obtained by mixing and kneading USY zeolite (the molar ratio of silica/alumina: 37) with a mean particle diameter of 1.1 µm, silica alumina (the molar ratio of silica/alumina: 14), and an alumina binder in a mass ratio of 3:57:40, molding this mixture into a cylindrical shape having a diameter of about 1.6 mm and a length of about 4 mm, and then, calcining this molded product in air for 1 hour at 500°C. Platinum was loaded on this carrier by impregnating a chloroplatinic acid aqueous solution. Catalyst B was obtained by drying this metal-loaded carrier for 3 hours at 120°C, and then, calcining the metal-loaded carrier for 1 hour at 500°C. In addition, the amount of platinum supported was 0.8 mass% with respect to the carrier.

### (Catalyst C)

A carrier was obtained by mixing and kneading silica alumina (the molar ratio of silica/alumina: 14) and an alumina binder in a mass ratio of 60:40, molding this mixture into a cylindrical shape having a diameter of about 1.6 mm and a length of about 4 mm, and then, calcining this molded product in air for 1 hour at 500°C. Platinum was loaded on this carrier by impregnating a chloroplatinic acid aqueous solution. Catalyst C was obtained by drying this metal-loaded carrier for 3 hours at 120°C and then calcining the metal-loaded carrier for 1 hour at 500°C. In addition, the amount of platinum supported was 0.8 mass% with respect to the carrier.

**[Table 1]**

| | | Example 1 | Example 2 | Comparative Example |
|---|---|---|---|---|
| Pretreatment Conditions | Catalyst | Catalyst A | Catalyst A | None |
| | LHSV h⁻¹ | 20.0 | 20.0 | |
| | Initial Reaction Temperature (SOR) °C | Same as Hydroprocessing Conditions of Respective Fractions | 320 | |
| | Partial Pressure of Hydrogen MPa | | 2.0 | |
| | Hydrogen/Oil Ratio NL/L | | 169 | |
| Hydrocracking Conditions of Wax Fraction | Catalyst | Catalyst B | Catalyst B | Catalyst B |
| | LHSV h⁻¹ | 2.0 | ← | ← |
| | Initial Reaction Temperature (SOR) °C | 315 | ← | ← |
| | Partial Pressure of Hydrogen MPa | 4.0 | ← | ← |
| | Hydrogen/Oil Ratio NL/L | 676 | ← | ← |
| | Relative Lifespan | 1.1 | 1.1 | 1.0 |
| Hydrotreating Conditions of Middle Distillate | Catalyst | Catalyst C | Catalyst C | Catalyst C |
| | LHSV h⁻¹ | 2.0 | ← | ← |
| | Initial Reaction Temperature (SOR) °C | 333 | ← | ← |
| | Partial Pressure of Hydrogen MPa | 3.0 | ← | ← |
| | Hydrogen/Oil Ratio NL/L | 338 | ← | ← |
| | Relative Lifespan | 1.2 | 1.2 | 1.0 |
| Hydrotreating Conditions of Naphtha Fraction | Catalyst | Catalyst C | Catalyst C | Catalyst C |
| | LHSV h⁻¹ | 2.0 | ← | ← |
| | Initial Reaction Temperature (SOR) °C | 320 | ← | ← |
| | Partial Pressure of Hydrogen MPa | 2.0 | ← | ← |
| | Hydrogen/Oil Ratio NL/L | 169 | ← | ← |
| | Relative Lifespan | 1.2 | 1.2 | 1.0 |

### (Example 1)

### (Fractional Distillation of FT Synthesis Hydrocarbons)

A hydrocarbon oil (FT synthesis hydrocarbons) (the content of hydrocarbons with a boiling point of 150°C or higher: 84 mass%, the content of hydrocarbons with a boiling point of 360°C or higher: 42 mass%, and the content of hydrocarbons with a carbon number of 20 to 25: 25.2 mass%, the contents of all of which are based on the total mass (the total hydrocarbons with a carbon number of 5 or more ) of the FT synthesis hydrocarbons) obtained by an FT synthesis method were fractionally distilled into the naphtha fraction (the boiling point of which is lower than about 150°C), the middle distillate (the boiling point of which is about 150 to 360°C), and the wax fraction (the boiling point of which exceeds about 360°C) in the first fractionator 40.

### (Hydrocracking of Wax Fraction)

In a single fixed bed flow type reactor (wax fraction hydrocracking reactor 50), Catalyst A (15 ml) was packed in the upstream stage (pretreatment apparatus 80), Catalyst B (150 ml) was packed in the subsequent stage (downstream stage), and these catalysts were reduced at 340°C for 2 hours under a hydrogen gas stream, and then the wax fraction obtained above was supplied at a rate of 300 ml/h from the top of the wax fraction hydrocracking reactor 50, and was hydrocracked under the reaction conditions described in Table 1 under a hydrogen gas stream.

That is, hydrogen was supplied from the top in a hydrogen/oil ratio of 676 NL/L with respect to the wax fraction, a back pressure regulating valve was adjusted so that the reactor pressure became constant at an inlet pressure of 4.0 MPa, and hydrocracking was performed under this condition. The reaction temperature (SOR) at this time was 315°C.

### (Hydrotreating of Middle Distillate)

In a single fixed bed flow type reactor (middle distillate hydrotreating reactor 52 ), Catalyst A (15 ml) was packed in the upstream stage (pretreatment apparatus 80), Catalyst C (150 ml) was packed in the subsequent stage (downstream stage), and these catalysts were reduced at 340°C for 2 hours under a hydrogen gas stream, and then the middle distillate obtained above was supplied at a rate of 300 ml/h from the top of the middle distillate hydrotreating reactor 52, and was hydrotreated under the reaction conditions described in Table 1 under a hydrogen gas stream.

That is, hydrogen was supplied from the top in a hydrogen/oil ratio of 338 NL/L with respect to the middle distillate, a back pressure regulating valve was adjusted so that the reactor pressure became constant at an inlet pressure of 3.0 MPa, and a hydrotreating was performed under this condition. The reaction temperature (SOR) was 338°C.

### (Hydrotreating of Naphtha Fraction)

In a single fixed bed flow type reactor (naphtha fraction hydrotreating reactor 54), Catalyst A (15 ml) was packed in the upstream stage (pretreatment apparatus 80), Catalyst C (150 ml) was packed in the subsequent stage (downstream stage), and these catalysts were reduced at 340°C for 2 hours under a hydrogen gas stream, and then the naphtha fraction obtained above was supplied at a rate of 300 ml/h from the top of the naphtha fraction hydrotreating reactor 54, and was hydrotreated under the reaction conditions described in Table 1 under a hydrogen gas stream.

That is, hydrogen was supplied from the top in a hydrogen/oil ratio of 338 NL/L with respect to the naphtha fraction, a back pressure regulating valve was adjusted so that the reactor pressure became constant at an inlet pressure of 2.0 MPa, and a hydrotreating was performed under this condition. The reaction temperature (SOR) was 320°C.

### (Example 2)

The treatment of the FT synthesis hydrocarbons was performed similarly to Example 1 except for the configuration in which separate fixed bed flow type reactors packed with Catalyst A (15 ml) ( pretreatment apparatus 80) are provided independently from the wax fraction hydrocracking reactor 50, the middle distillate hydrotreating reactor 52, and the naphtha fraction hydrotreating reactor 54 respectively at upstream thereof in a low. In addition, as described in Table 1, the pretreatment was performed by supplying respective fractions at a rate of 300 ml/h from the top of the reactor of the pretreatment apparatus 80, supplying hydrogen from the top in a hydrogen/oil ratio of 169 NL/L with respect to the respective fractions, and adjusting the back pressure regulating valve so that the inlet pressure of the reactor pressure became constant at 2.0 MPa, and was performed under the condition of a reaction temperature (SOR) of 320°C.

### (Comparative Example 1)

The treatment of the FT synthesis hydrocarbons was performed similarly to Example 1 except for the configuration in which the pretreatment apparatus 80 is not provided.

### (Evaluation of Lifetime of Catalyst)

In the hydroprocessing of the respective fractions, the time which is taken until the reaction temperature for obtaining predetermined hydroprocessed oils reaches 350°C from an initial reaction temperature (SOR) was defined as a catalyst lifetime.

In addition, the evaluation of the catalyst lifetime was made by comparison in relative values (relative lifetime) when the catalyst lifetime of Comparative Example 1 was set to 1.0, for every hydroprocessing catalyst for the respective fractions.

It can be seen that the catalyst lifetime in both of Examples 1 and 2, in which a pretreatment step was provided, can be prolonged compared to Comparative Example 1, in which the pretreatment step is not provided.

### Industrial Applicability

According to the liquid fuel producing method and liquid fuel producing system of the present invention, since the poisoning of a hydroprocessing catalyst caused by the adsorption of a carbon monoxide gas can be suppressed, the replacement frequency of the catalyst can be reduced. This makes it possible to reduce the cost required for maintenance.

### Reference Signs List

- 50:: WAX FRACTION HYDROCRACKING REACTOR
- 52:: MIDDLE DISTILLATE HYDROTREATING REACTOR
- 54:: NAPHTHA FRACTION HYDROTREATING REACTOR
- 80:: PRETREATMENT APPARATUS
- 80A:: CATALYST FOR PRETREATMENT
- 81:: HYDROPROCES SING APPARATUS
- 81A:: HYDROPROCESSING CATALYST

## Claims

1. A liquid fuel producing method which synthesizes hydrocarbons from a synthesis gas by a Fisher-Tropsch synthesis reaction and produces liquid fuels by using the hydrocarbons, the method comprising:
subjecting the hydrocarbons to a pretreatment in the presence of a hydrogen by using a catalyst for the pretreatment in which at least one kind of metal selected from metals of Groups 6, 7, 8, 9, 10, 11, and 14 of the Periodic Table is supported on a carrier; and
hydroprocessing the hydrocarbons by using a hydroprocessing catalyst after the pretreatment.

2. The liquid fuel producing method according to Claim 1,
wherein a noble metal of Group 9 or 10 of the Periodic Table is further supported on the carrier of the catalyst for the pretreatment.

3. The liquid fuel producing method according to Claim 1 or 2,
wherein at least one kind of metal selected from metals of Groups 6, 7, 8, 9, 10, 11, and 14 of the Periodic Table is at least one kind of metal selected from ruthenium, nickel, and copper.

4. The liquid fuel producing method according to Claim 2 or 3,
wherein the noble metal of Group 9 or 10 of the Periodic Table is platinum.

5. The liquid fuel producing method according to Claim 3 or 4,
wherein ruthenium of 0.05 mass% or more and 10.0 mass% or less with respect to the total mass of the catalyst is supported on the carrier of the catalyst for the pretreatment.

6. The liquid fuel producing method according to Claim 4 or 5,
wherein platinum of 0.05 mass% or more and 10.0 mass% or less with respect to the total mass of the catalyst is supported on the carrier of the catalyst for the pretreatment.

7. The liquid fuel producing method according to any one of Claims 1 to 6,
wherein the hydrocarbons are fractionally distilled before the hydroprocessing.

8. The liquid fuel producing method according to Claim 7,
wherein every fraction obtained by fractionally distilling is separately subjected to the pretreatment the hydrocarbons.

9. A liquid fuel producing system which synthesizes hydrocarbons from a synthesis gas by a Fisher-Tropsch synthesis reaction and produces liquid fuels by using the hydrocarbons, the system comprising:
a pretreatment apparatus which is packed with a catalyst for a pretreatment in which at least one kind of metal selected from metals of Groups 6, 7, 8, 7, 10, 11, and 14 of the Periodic Table is supported on a carrier, is connected with a supply line for a hydrogen gas, and in which the hydrocarbons are subjected to the pretreatment ; and
a hydroprocessing apparatus which is located at the downstream of the pretreatment apparatus, is packed with a hydroprocessing catalyst, and hydroprocesses the hydrocarbons flowing out of the pretreatment apparatus.

10. The liquid fuel producing system according to Claim 9,
wherein a noble metal of Group 9 or 10 of the Periodic Table is supported on the carrier of the catalyst for the pretreatment.

11. The liquid fuel producing system according to Claim 9 or 10,
wherein at least one kind of metal selected from metals of Groups 6, 7, 8, 9, 10, 11, and 14 of the Periodic Table is at least one kind of metal selected from ruthenium, nickel, and copper.

12. The liquid fuel producing system according to Claim 10 or 11,
wherein the noble metal of Group 9 or 10 of the Periodic Table is platinum.

13. The liquid fuel producing system according to Claim 11 or 12,
wherein ruthenium of 0.05 mass% or more and 10.0 mass% or less with respect to the total mass of the catalyst is supported on the carrier of the catalyst for the pretreatment.

14. The liquid fuel producing system according to Claim 12 or 13,
wherein platinum of 0.05 mass% or more and 10.0 mass% or less with respect to the total mass of the catalyst is supported on the carrier of the catalyst for the pretreatment.

15. The liquid fuel producing system according to any one of Claims 9 to 14, further comprising a fractional distillation apparatus which is provided at the upstream of the hydroprocessing apparatus and fractionally distills the hydrocarbons.

16. The liquid fuel producing system according to Claim 15,
wherein the pretreatment apparatus is provided separately for every fraction which is obtained by fractionally distilling the hydrocarbons at the downstream of the fractional distillation apparatus.
